# EUROPEAN PATENT SPECIFICATION

(11) **EP 3 592 816 B1**
(45) Date of publication and mention of the grant of the patent: **29.11.2023**
(21) Application number: 18711660.3
(22) Date of filing: 09.03.2018
(51) Int. Cl.: C09D 11/037, C09D 11/322, C09D 11/52

(54) **CONDUCTIVE INK COMPOSITION**
LEITFÄHIGE TINTENZUSAMMENSETZUNG
COMPOSITION D'ENCRE CONDUCTRICE

(30) Priority: 09.03.2017 GB 201703777
(43) Date of publication of application: 15.01.2020
(73) Proprietor: Pilkington Group Limited, Lancashire L40 5UF (GB); NGF Europe Limited, St Helens, Merseyside WA9 4PR (GB)
(72) Inventor: MASON, David, Burscough Lancashire L40 0RP (GB)
(74) Representative: Hope, Adam John
(86) International application number: PCT/GB2018/050610
(87) International publication number: WO 2018/162926

(56) References cited:
- EP-A1- 1 832 632
- WO-A1-2008/031015
- WO-A1-2017/031487
- WO-A2-2007/062131
- JP-A- 2013 206 777
- US-A- 5 350 448
- US-A- 5 945 035

## Description

Conductive inks have been widely used in the manufacture of conducting elements in printed circuits and sensor electrodes. Other major markets for conductive inks include emerging applications, such as displays, backplanes, radio frequency identification (RFID), photovoltaics, lighting and disposable electronics, as well as traditional thick film applications in which screen printing is used in the creation of PCBs, automobile heaters, EMI shielding, and membrane switches. There is tremendous interest in the field of RFID and printed electronics. RFID tags are used in the automotive field for vehicle identification.

One type of conductive ink composition includes a suspension of conductive particles, applied to a surface via a number of deposition techniques, including painting on with a brush, syringe application, stamping or printing. In known printing processes, such as silk-screen printing and ink-jet printing, a conductive ink composition may comprise combinations of solvents, pigments, dyes, resins, lubricants, solubilizers, surfactants, solids, fluorescents and the like. Conductive ink components may comprise a medium, a binder and conductive solids. Once applied by a marking process to the surface of a substrate the medium is evaporated and the binder adheres the conductive solids to the substrate surface. In this way the ink is dried, the resulting residue may be subjected to a heat treatment.

Among various electrically conductive nanoparticles, silver is commonly considered the material of choice for RFID antennas. However, silver nanoparticles are very expensive. Additionally silver-based inks produce dull-orange marks when cured, due to the oxidisation of the silver. Such marks are not attractive to many users, and are unwelcome in transparent printed electronic articles. Alternative carbon-based conductive inks contain particles of graphite that are suspended in a binder/resin and a solvent. However, carbon-based conductive inks are not sufficiently conducting for many printed electronics applications. Additionally, carbon-based conductive inks based on graphite may require heat treatment (curing) at temperatures ranging from 50° C to several hundred degrees Celsius. In some inks this high temperature treatment, or curing, is necessary to attain high conductivity in the resulting conductors. However, the high temperatures needed for curing can limit the usefulness of carbon-based inks.

Another class of carbon-based conductive ink is based on carbon nanoparticles, including carbon nanotubes, nanorods, buckminsterfullerene and graphene flakes.

US20100000441A1 (Nanotek Instruments Inc) discloses a nanographene platelet-based conductive ink comprising nanographene platelets and a liquid medium in which the nanographene platelets are dispersed, wherein the nanographene platelets occupy a proportion of at least 0.001% by volume based on the total ink volume. Such carbon nanoparticles, although relatively conducting, are prohibitively expensive. The aggregation and entanglement of carbon nanoparticles, in particular carbon nanotubes, also dramatically increases the viscosity of the dispersing liquid. The production of carbon nanoparticles involves the use of heavy metal elements as catalysts that are undesirable in many applications and must be removed, at additional expense.

US 7282260 B2 (Unitech LLC) discloses a coating composition with electrical conductive properties comprising a water emulsion polymer binder, electrically conductive particles and water. The electrically conductive particles disclosed are a combination of uncoated carbon particles and metal coated particles. The metal coated particles disclosed are selected from the group consisting of ceramic microspheres, ceramic fibers, glass flakes, glass spheres, glass fibers, boron nitrate powder or flake and mica flakes. The electrically conductive particles disclosed have a mean size less than 100 µm. The metal coated particles are provided with metal coatings selected from the group consisting of silver, nickel, gold, platinum, copper, aluminum, iron, iron compounds and palladium. The ink disclosed is water based with a water emulsion polymer binder - it is preferable to use a conductive ink with an organic solvent to speed the evaporation of the ink medium and for improved flow characteristics. Many printing systems are designed for use with organic solvent based inks.

US7097788B2 (University of Illinois) discloses a method of increasing the conductivity of an ink, comprising orienting particles in the ink. The ink comprises the particles and solvent, and the particles are conductive anisotropic particles.

There remains a need for a conductive ink composition that: is printable, preferably ink-jet printable; produces marks of high electrical conductivity; is miscible with a wide range of liquid mediums; is sufficiently concentrated to allow time effective printing processes; maintains good drying properties to allow time effective printing processes; does not require denaturing heat treatment; and is cost effective to manufacture.

It is the object of the present invention to provide an alternative conductive ink composition, articles marked with the conductive ink composition, processes of manufacturing the conductive ink composition and processes of manufacturing the marked article.

The present invention, according to a first aspect, provides a conductive ink composition comprising conductive solids and a medium, characterised in that the conductive solids comprise glass flakes coated with an electrically conductive coating, wherein the electrically conductive coating comprises a conductor selected from the group comprising silver, nickel, gold, metal nanoparticles, indium tin oxide, fluorine doped tin oxide; the glass flakes have average diameter 30 µm to 400 µm and an average thickness in a range from 0.1 µm to 8 µm; and wherein the glass flakes have an aspect ratio of average diameter divided by average thickness of greater than or equal to three; and wherein the conductive ink composition comprises a percentage by weight of glass flakes coated with an electrically conductive coating less than or equal to 50%; and wherein the conductive ink composition comprises a second conductive particulate material selected from the group comprising graphite, graphene, carbon nanoparticles. The conductive ink composition offers advantageous properties, including high conductivity and cost effective manufacture.

The inventors have discovered that the addition of glass flakes coated with an electrically conductive coating to a conductive ink composition surprisingly improves the conductivity of a dried ink residue formed from the conductive ink composition. Furthermore, the inventors have surprisingly discovered that the addition to the conductive ink composition of a small proportion by weight of glass flakes provided with a conductive coating can provide a decrease in the resistance of the conductive ink residue of unexpected magnitude. These properties are believed to be due to the unexpected preferential alignment of the glass flakes provided with a conductive coating in the conductive ink residue, where-by conductive paths of glass flakes are formed. The inventors disclose combinations of glass flake dimension and proportion in the conductive ink composition to control glass flake orientation.

The conductive ink composition comprises a medium, functioning as a carrier for the conductive solids. Preferably, the conductive ink medium is any solvent suitable for marking processes such as printing or painting. Preferably, the medium is a solvent, more preferably a solvent that is liquid at common processing temperatures and pressures and does not readily undergo a phase change at standard processing temperatures and pressures. Preferably, at atmospheric pressure the boiling or sublimation temperature of the medium is greater than 10 °C and the melting point is less than 55 °C. A lower boiling or sublimation temperature of medium is likely to cause build-up of ink residue within the printing apparatus. A greater melting point of the conductive ink composition is associated with increased viscosity and poor printability. The medium may be selected from the group comprising water, organic solvents, ionic solvents, liquid metals or metal alloys, or mixtures thereof. Preferably, the medium has water content by volume less than 10%, more preferably less than 5%, most preferably less than 1%. A medium that is predominantly water free may have improved evaporation characteristics. Alternatively the medium has a water content greater than 70%. A medium with high water content may be environmentally preferable. Preferably, the medium comprises an organic solvent selected from a group consisting of alcohols, aldehydes, ketones, ethylene glycol, ethers, dioxane, esters, hydrocarbons or aromatics, preferably C1-C16 hydrocarbons or aromatics, more preferably C1-C10 hydrocarbons or aromatics, and mixtures thereof. Examples of alcohols include methanol, ethanol, isopropanol, perfluoropropanol, 2-Methylpropan-1-ol, 1-butanol, 2-butanol, 2-butoxyethanol, 2-(2-Butoxyethoxy)ethanol and octanol. Examples of aldehydes include formaldehyde, acetaldehyde, propionaldehyde, and glutaraldehyde. Examples of ketones include acetone, methylethylketone, Methylpentan-2-one, and diethylketone. Example of esters include methyl acetate, ethyl acetate and phthalic acid butyl benzyl ester. Examples of hydrocarbons include hexane, heptane, octane, nonane, and decane, dichloromethane, chloroform, 1,1,1-trichloroethane, trichloroethylene, isophorone, 2-nitropropane, tetrachloroethylene, naptha, and acetonitrile. Examples of aromatics include benzene, toluene, xylene, 1,2,4-trimethylbenzene, phenol and naphthalene.

Preferably, the conductive solids are dispersed evenly within the medium. The conductive solids may comprise particles of materials selected from the group comprising carbon particles, metallic particles, coated glass particles, coated ceramic particles. The conductive solids may comprise particles of shape selected from the group comprising spheres, flakes, rods, polyhedra. The conductive solids may be porous or pitted. The conductive solids may comprise particles with radius from around 1 nm to around 1 mm. Methods of measurement of average diameter and average thickness of particles are well known in the art, as disclosed in EP2017300A1, herein incorporated by reference.

Preferably, the conductive solids comprise glass flakes provided with a conductive coating. Glass flakes are herein defined as particles of glass, which are substantially planar and have an aspect ratio, defined as average diameter divided by average thickness, greater than or equal to 3. Glass flakes are thus clearly distinguished from glass powder, glass spheres and glass fibre.

Preferably, the glass flakes have average diameter in a range from 10 µm to 540 µm, more preferably from 30 µm to 400 µm, most preferably from 50 µm to 150 µm. Glass flakes with an average diameter significantly larger than this may have a detrimental effect on the viscosity of the conductive ink composition. Glass flakes with an average diameter significantly smaller than this may not be cost effective to manufacture. Preferably, the glass flakes have average thickness in a range from 0.1 µm to 8 µm, and an aspect ratio of average diameter divided by average thickness greater than or equal to 3, more preferably 30, yet more preferably 50, most preferably 250. A lower aspect ratio is associated with a reduction in the conductive benefit of the glass flakes provided with a conductive coating in the ink residue.

Preferably, the glass flakes provided with a conductive coating are distributed evenly within the medium to allow reproducible electrical characteristics. Preferably, the percentage by weight of glass flakes provided with an electrically conductive coating within the conductive ink composition is less than or equal to 50%, preferably less than or equal to 30%, more preferably less than or equal to 15%, yet more preferably less than or equal to 10%, even more preferably less than or equal to 5%. A greater percentage by weight of glass flakes coated with an electrically conductive coating within the conductive ink composition is associated with increased cost. A lower percentage by weight of glass flakes provided with a conductive coating is associated with a reduction in conduction ability.

The conductive coating preferably comprises metal, preferably selected from the group silver, gold, nickel. Alternatively the conductive coating comprises transparent conductive oxide, preferably selected from the group comprising fluorine doped tin oxide, indium doped tin oxide. Multiple layers of differing composition may be applied to the glass flakes, such as gold followed by silver. An example of glass flakes provided with a conductive coating is Microglas^{®} Metashine, available from NGF Europe Limited, St Helens, UK. Microglas^{®} is a registered trade mark of NSG, Tokyo, Japan.

The conductive ink composition comprises additional conductive particles. The additional conductive particles improve electrical connections in the ink residue between separate glass flakes provided with a conductive coating. Preferably, the additional conductive particles have average diameter less than the average diameter of the glass flake. Preferably, the additional conductive particles have average diameter less than 200 µm, more preferably less than 100 µm, yet more preferably less than 30 µm. Larger additional conductive particles may reduce the printability of the ink. The additional conductive particles are selected from the group comprising graphite, graphene and carbon nanoparticles. Preferably, the carbon nanoparticles are selected from the group comprising carbon nanotubes, carbon nanorods, buckminsterfullerene, graphene flakes and graphene platelets.

Preferably, the percentage by weight of additional conductive particles within the conductive ink composition is between 15% and 60%, more preferably between 20% and 50%. A greater percentage by weight of additional conductive particles within the conductive ink composition is associated with reduced printability. A lower percentage by weight of additional conductive particles within the conductive ink composition is associated with a reduction in conduction ability.

Preferably, the percentage by weight of additional conductive particles within the conductive ink composition is between 3x and 10x the percentage by weight of glass flakes provided with an electrically conductive coating within the conductive ink composition.

The conductive ink composition preferably additionally comprises filler particles. The filler particles improve the strength and durability of the ink residue and reduce shrinkage. Preferably, the filler particles have average diameter less than the average diameter of the glass flake. Preferably, the filler particles have average diameter less than 200 µm, more preferably less than 100 µm, yet more preferably less than 30 µm. Larger filler particles may reduce the printability of the ink. Preferably, the filler particles are selected from the group comprising graphite, carbon black, uncoated glass particles, coated glass particles, carbon nanotubes, carbon nanoparticles, carbon nanorods, buckminsterfullerene, graphene, silver particles, copper particles, gold particles. Preferably, the filler particles are conductive particles.

Preferably, a dispersing agent or surfactant is used to help uniformly disperse particles in the liquid medium. Surfactants or dispersing agents that can be used include anionic surfactants, non-ionic surfactants, cationic surfactants, amphoteric surfactants, silicone surfactants, fluoro-surfactants, and polymeric surfactants. One such surfactant is DuPont's Zonyl series that entails anionic, cationic, non-ionic, and fluoro-based species. Other useful dispersing agents include sodium hexametaphosphate, sodium lignosulphonate (e.g., marketed under the trade names Vanisperse CB and Marasperse CBOS-4 from Borregaard LignoTech), sodium sulfate, sodium phosphate, sodium sulfonate, sodium dodecylsulfate, sodium dodecylbezenesulfonate, and TRITON-X. Ultrasonic or shearing energy also enables the resulting conductive solids to be well dispersed in the medium, producing a homogeneous suspension.

Preferably, a binding resin is used to increase the adherence of the dried ink residue to the substrate following evaporation of a portion of the conductive ink composition medium. Preferably, the binding resin is a polymer binder. Preferably, the polymer binder is a conductive polymer. Example classes of binders include polyalkylenes, polyalkylene glycols, polyalkylene alcohols, polyalkylene glycols, polyalkylene esters, and copolymers or mixtures thereof. Specific examples of binders include polyethylene, polypropylene, chlorinated polypropylene, polyvinyl alcohol, polyvinyl acetate, polyacrylate, polymethacrylate, cellulose polysaccharides, polystyrol, and mixtures or copolymers thereof. The conductive ink may comprise polymer binder in the form of oligomeric chains or monomers. A polymerisation reaction to form the polymer binder matrix may be initiated by the application of heat, visible or UV light or other known polymerisation methods. Preferably, the conductive polymer binder is poly(3,4-ethylenedioxythiophene)-poly(styrene sulfonate) (PEDOT-PSS).

The conductive ink composition preferably comprises functional materials that improve the shelf life and printability of the ink. Such functional materials may include stabilizers, antioxidants and viscosity modifying compounds.

The conductive ink composition preferably comprises decorative pigments. Decorative pigments may provide the conductive ink composition gloss or matte finish, colour, tint or hue, textured or smooth finish, fluorescence or phosphorescence, variable opacity, luminescence, or a combination of such. Decorative pigments preferably are selected from the group consisting of dyes, powders, coated glass flakes, nanoparticles, quantum dots. An example of coated glass flakes is Microglas^{®} Metashine, available from NGF Europe Limited, St Helens, UK. Microglas^{®} is a registered trade mark of NSG, Tokyo, Japan.

The conductive ink composition is preferably inkjet printable, as inkjet printing is a cost effective method of marking and patterning a range of rigid and flexible substrates. Such substrates may include metal, glass, paper, ceramics, fabric, and the like. Inkjet printing of electrically conductive inks offers a platform for generating electrical components, such as electrodes and interconnects. Preferably, the viscosity of the conductive ink composition is within the range of 0.5 to 4 Pa·S. A more viscous ink may have reduced printability. A less viscous ink may be less concentrated and reduce printing efficiency. Alternatively, the viscosity of the conductive ink composition is within the range of 1-100 mPa S, making the composition suitable for ink-jet printing.

According to a second aspect of the invention, a printed article comprises a substrate and a mark, wherein the mark comprises conductive solids, characterised in that the conductive solids comprises glass flake provided with a conductive coating as set out in claim 13.

Preferably, the mark is adjacent to a surface of the substrate. Preferably, the printed article is an antistatic article, capable of reducing a voltage differential in a non-destructive manner.

Preferably, the substrate is a dielectric material to form non-conductive barriers between printed circuit elements, alternatively the substrate may be of a conductive material for producing diffuse conduction of electrical and thermal energy. Example substrates include paper, glass, wood, concrete, fabric, plaster, metals and semiconductors, conductive films, coatings and layers, ceramics, polymers and plastics, polyethylene and other polyolephins, polyurethanes, polyvinyl chloride (PVC), polystyrene, polyesters.

Preferably, the mark is a conductive mark. Preferably, the conductive mark is a conductive track. A track is defined as a substantially linear mark, wherein the length of the mark is greater than 1.5 times the width of the mark. Preferably, the conductive track is attached to electrical components at the extreme ends of the track. Preferably, the conductive track is attached to electrical components at points along its length. The electrical components are not particularly limited, and may be selected from the group comprising sensors, LEDs, cells, photovoltaic modules.

Preferably, the conductive track is of a width in a range 50 µm to 10 cm, more preferably in a range 100 µm to 1 mm, most preferably 150 µm to 300 µm. A wider conductive track is associated with increased expense. A thinner conductive track is associated with reduced conductivity. The length of the conductive track is not particularly limited.

Preferably, the conductive track is of a height from the substrate in the range 1 µm to 1 mm, more preferably in the range 5 µm to 500 µm, most preferably in the range 10 µm to 300 µm. A conductive track of greater height may be more susceptible to accidental removal by abrasion. A conductive track of reduced height is associated with reduced conductivity.

The mark may be formed of a conductive ink residue, formed from a conductive ink composition. Preferably, the conductive ink composition is the conductive ink composition as described in claim 1.

The invention, according to a third aspect, provides a process of manufacturing a conductive ink composition, comprising steps:
a. Providing a medium
b. Providing conductive solids
c. Dispersing the conductive solids in the medium to provide a conductive ink composition,

Characterised in that the conductive solids comprises glass flakes coated with a conductive coating, as set out in claim 15.

In particular the process of manufacturing a conductive ink composition comprises the steps: providing a medium; providing conductive solids; dispersing the conductive solids in the medium to provide a conductive ink composition, characterised in that the conductive solids comprises glass flakes coated with a conductive coating.

Preferably, the conductive solids are dispersed in the medium using a physical mixing process. The physical mixing process is preferably a stirring or an ultrasound process.

Preferably, the conductive ink composition manufactured by the process is the conductive ink composition as described in claim 1.

The invention, according to a fourth aspect, provides a process of manufacturing a printed article comprising a substrate and a mark, comprising the steps:
a. Providing a substrate
b. Providing a conductive ink composition comprising a medium and conductive solids
c. Marking the substrate with the conductive ink composition
d. Evaporating a portion of the medium to form a printed article bearing a conductive ink residue,

Characterised in that the conductive solids comprises glass flakes coated with a conductive coating, as set out in claim 16.

Preferably, the printed article manufactured by the process is the printed article as described in claim 13. Preferably, the conductive ink composition is the conductive ink composition as described in claim 1.

Preferably, the substrate is marked using a printing process. Preferably, the printing process is selected from the group comprising screen printing, ink-jet printing, lithography, flexography, xerography, thermography and gravure printing. Most preferably, the printing process is ink jet printing. Alternatively the substrate is marked by painting, stamping or syringe application.

The medium may be evaporated using combinations of heat and pressure sufficient to form a conductive ink residue, and will be apparent to those skilled in the art.

Preferably, following or during the evaporation of the conductive ink composition medium the ink residue is cured. Preferably, the curing process is sufficient to improve the adherence of the residue to the substrate, the conductive properties of the residue, or a combination of the two. Preferably, the residue is cured using a heat treatment, UV light, or a combination. Heat treatment is a cost effective method of curing the ink residue. Preferably, the heat treatment is between 50 °C and 200 °C, more preferably between 80 °C and 120 °C. Higher temperature of heat treatment may denature the ink residue or reduce the structural integrity of the substrate. Lower temperature of heat treatment may reduce the effectiveness of the curing process. Preferably, the UV light is produced using a lamp providing UVA radiation, UVB radiation or a combination. Preferably, the curing process is between 4 minutes and 90 minutes. A shorter time may reduce the effectiveness of the curing process. A longer time may reduce the structural integrity of the substrate.

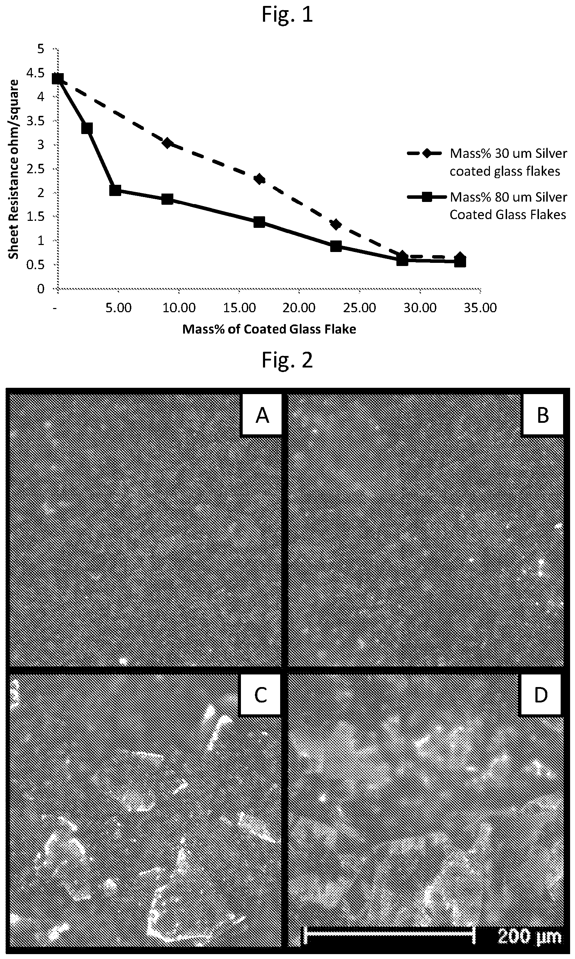

Fig. 1 shows a graph of the influence of a percentage by weight of glass flakes coated with an electrically conductive coating in the conductive ink composition on the sheet resistance of a glass sheet provided with a coating of the cured conductive ink composition examples.

Fig. 2 shows surface microscopy images for example 5 (upper left quadrant, A), example 7 (upper right quadrant, B), example 9 (lower left quadrant, C) and example 13 (lower right quadrant, D)

**Table 1. Examples of conductive ink compositions**

| Example | Mass% Graphite Ink | Mass% 30 µm Silver coated glass flakes | Mass% 80 µm Silver Coated Glass Flakes | Sheet Resistance (ohm/sq) |
|---|---|---|---|---|
| 1 | 100.00 | | | 4.37 |
| 2 | 97.56 | | 2.44 | 3.34 |
| 3 | 95.24 | | 4.76 | 2.05 |
| 4 | 90.91 | 9.09 | | 3.03 |
| 5 | 90.91 | | 9.09 | 1.86 |
| 6 | 83.33 | 16.67 | | 2.29 |
| 7 | 83.33 | | 16.67 | 1.38 |
| 8 | 76.92 | 23.08 | | 1.33 |
| 9 | 76.92 | | 23.08 | 0.88 |
| 10 | 71.43 | 28.57 | | 0.68 |
| 11 | 71.43 | | 28.57 | 0.59 |
| 12 | 66.67 | 33.33 | | 0.65 |
| 13 | 66.67 | | 33.33 | 0.56 |

Examples 1 to 13 were prepared by the following process: graphite ink (Gwent Electronic Materials Ltd., Pontypool, UK - Carbon Graphite Ink), silver coated glass flakes (NGF Europe), acetone (1 cm³) were combined and stirred, solvent evaporated overnight. A glass slide (22 cm wide, 9 cm length) was prepared with two sections of tape (120 µm thick) forming a trough 5 cm in width. A marked slide was produced by the bar casting method, wherein the ink composition comprising graphite particles and silver coated glass flake (2.5 g) was placed on the edge of a glass slide at one end of the trough, and pulled along the trough using a glass rod. Excess ink was removed and the glass plate heated on a hot plate (140 C, 1 hour). Table 1 shows the sheet resistance of the coated glass plate, measured using a four point probe.

## Claims

1. A conductive ink composition comprising conductive solids and a medium, **characterised in that**:
the conductive solids comprise glass flakes coated with an electrically conductive coating;
wherein the electrically conductive coating comprises a conductor selected from the group comprising silver, nickel, gold, metal nanoparticles, indium tin oxide, fluorine doped tin oxide;
the glass flakes have average diameter 30 µm to 400 µm and an average thickness in a range from 0.1 µm to 8 µm; and
wherein the glass flakes have an aspect ratio of average diameter divided by average thickness of greater than or equal to three; and
wherein the conductive ink composition comprises a percentage by weight of glass flakes coated with an electrically conductive coating less than or equal to 50%; and
wherein the conductive ink composition comprises a second conductive particulate material selected from the group comprising graphite, graphene, carbon nanoparticles.

2. The conductive ink composition of any preceding claim wherein the boiling or sublimation temperature of the medium is greater than 10 °C and the melting point of the medium is less than 55 °C.

3. The conductive ink composition of any preceding claim wherein the medium comprises water or an organic solvent.

4. The conductive ink composition of any preceding claim wherein medium comprises an organic solvent selected from the group comprising DCM, chloroform, toluene, benzene, an ether, an alcohol.

5. The conductive ink composition of any preceding claim wherein the glass flakes have average diameter 50 µm to 150 µm.

6. The conductive ink composition of any preceding claim, wherein the conductive ink composition comprises a binder resin.

7. The conductive ink composition of any preceding claim wherein the conductive ink composition comprises a percentage by weight of glass flakes coated with an electrically conductive coating less than or equal to 30%, more preferably less than or equal to 15%, yet more preferably less than or equal to 10%, even more preferably less than or equal to 5%.

8. A printed article comprising a substrate and a mark, wherein the mark comprises conductive solids, **characterised in that** the conductive solids comprise glass flakes provided with a conductive coating
wherein the electrically conductive coating comprises a conductor selected from the group comprising silver, nickel, gold, metal nanoparticles, indium tin oxide, fluorine doped tin oxide;
the glass flakes have average diameter 30 µm to 400 µm and an average thickness in a range from 0.1 µm to 8 µm; and
wherein the glass flakes have an aspect ratio of average diameter divided by average thickness of greater than or equal to three; and
wherein the conductive ink composition comprises a second conductive particulate material selected from the group comprising graphite, graphene, carbon nanoparticles.

9. The printed article of claim 8, wherein the mark is a conductive track.

10. A process of manufacturing a conductive ink composition, comprising steps:
a. providing a medium;
b. providing conductive solids; and
c. dispersing the conductive solids in the medium to provide a conductive ink composition,
**characterised in that** the conductive solids comprise glass flakes coated with a conductive coating, wherein the electrically conductive coating comprises a conductor selected from the group comprising silver, nickel, gold, metal nanoparticles, indium tin oxide, fluorine doped tin oxide;
the glass flakes have average diameter 30 µm to 400 µm and an average thickness in a range from 0.1 µm to 8 µm; and
wherein the glass flakes have an aspect ratio of average diameter divided by average thickness of greater than or equal to three; and
wherein the conductive ink composition comprises a percentage by weight of glass flakes coated with an electrically conductive coating less than or equal to 50%; and
wherein the conductive ink composition comprises a second conductive particulate material selected from the group comprising graphite, graphene, carbon nanoparticles.

11. A process of manufacturing a printed article comprising a substrate and a mark, comprising the steps:
a. providing a substrate;
b. providing a conductive ink composition comprising a medium and conductive solids according to any of claims 1 to 7;
c. marking the substrate with the conductive ink composition; and
d. evaporating a portion of the medium to form a printed article bearing a conductive ink residue,
**characterised in that** the conductive solids comprise glass flakes coated with a conductive coating.

## Patentansprüche

1. Leitfähige Tintenzusammensetzung, die leitfähige Feststoffe und ein Medium umfasst, **dadurch gekennzeichnet, dass**:
die leitfähigen Feststoffe mit einer elektrisch leitfähigen Beschichtung beschichtete Glasflocken umfassen;
wobei die elektrisch leitfähige Beschichtung einen Leiter umfasst, der aus der Gruppe ausgewählt ist, die Silber, Nickel, Gold, Metallnanopartikel, Indiumzinnoxid und fluordotiertes Zinnoxid umfasst;
die Glasflocken einen durchschnittlichen Durchmesser von 30 µm bis 400 µm und eine durchschnittliche Dicke in einem Bereich von 0,1 µm bis 8 µm aufweisen;
die Glasflocken ein Seitenverhältnis des durchschnittlichen Durchmessers geteilt durch die durchschnittliche Dicke von größer oder gleich drei aufweisen;
wobei die leitfähige Tintenzusammensetzung einen Gewichtsprozentsatz an mit einer elektrisch leitfähigen Beschichtung beschichteten Glasflocken von kleiner oder gleich 50 % umfasst; und
wobei die leitfähige Tintenzusammensetzung ein zweites leitfähiges teilchenförmiges Material umfasst, das aus der Gruppe ausgewählt ist, die Graphit, Graphen und Kohlenstoff-Nanopartikel umfasst.

2. Leitfähige Tintenzusammensetzung nach einem der vorhergehenden Ansprüche, bei der die Siede- oder Sublimationstemperatur des Mediums größer als 10 °C und der Schmelzpunkt des Mediums kleiner als 55 °C ist.

3. Leitfähige Tintenzusammensetzung nach einem der vorhergehenden Ansprüche, bei der das Medium Wasser oder ein organisches Lösungsmittel umfasst.

4. Leitfähige Tintenzusammensetzung nach einem der vorhergehenden Ansprüche, bei der das Medium ein organisches Lösungsmittel umfasst, das aus der Gruppe ausgewählt ist, die DCM, Chloroform, Toluol, Benzol, einen Ether und einen Alkohol umfasst.

5. Leitfähige Tintenzusammensetzung nach einem der vorhergehenden Ansprüche, bei der die Glasflocken einen durchschnittlichen Durchmesser von 50 µm bis 150 µm aufweisen.

6. Leitfähige Tintenzusammensetzung nach einem der vorhergehenden Ansprüche, wobei die leitfähige Tintenzusammensetzung ein Bindemittelharz umfasst.

7. Leitfähige Tintenzusammensetzung nach einem der vorhergehenden Ansprüche, wobei die leitfähige Tintenzusammensetzung einen Gewichtsprozentsatz an mit einer elektrisch leitfähigen Beschichtung beschichteten Glasflocken umfasst, der weniger als oder gleich 30 %, bevorzugter weniger als oder gleich 15 %, noch bevorzugter weniger als oder gleich 10 % und noch bevorzugter weniger als oder gleich 5 % beträgt.

8. Bedruckter Gegenstand, der ein Substrat und eine Markierung umfasst, wobei die Markierung leitfähige Feststoffe umfasst, **dadurch gekennzeichnet, dass** die leitfähigen Feststoffe mit einer leitfähigen Beschichtung versehene Glasflocken umfassen, wobei die elektrisch leitfähige Beschichtung einen Leiter umfasst, der aus der Gruppe ausgewählt ist, die Silber, Nickel, Gold, Metallnanopartikel, Indiumzinnoxid, fluordotiertes Zinnoxid umfasst;
die Glasflocken einen durchschnittlichen Durchmesser von 30 µm bis 400 µm und eine durchschnittliche Dicke in einem Bereich von 0,1 µm bis 8 µm aufweisen; und
die Glasflocken ein Seitenverhältnis des durchschnittlichen Durchmessers geteilt durch die durchschnittliche Dicke von größer oder gleich drei aufweisen; und
die leitfähige Tintenzusammensetzung ein zweites leitfähiges teilchenförmiges Material umfasst, das aus der Gruppe ausgewählt ist, die Graphit, Graphen und Kohlenstoff-Nanopartikel umfasst.

9. Bedruckter Gegenstand nach Anspruch 8, bei dem die Markierung eine Leiterbahn ist.

10. Verfahren zur Herstellung einer leitfähigen Tintenzusammensetzung, das die folgenden Schritte umfasst:
a. Bereitstellen eines Mediums;
b. Bereitstellen von leitfähigen Feststoffen; und
c. Dispergieren der leitfähigen Feststoffe in dem Medium, um eine leitfähige Tintenzusammensetzung bereitzustellen,
**dadurch gekennzeichnet, dass** die leitfähigen Feststoffe mit einer leitfähigen Beschichtung beschichtete Glasflocken umfassen, wobei die elektrisch leitfähige Beschichtung einen Leiter umfasst, der aus der Gruppe ausgewählt ist, die Silber, Nickel, Gold, Metallnanopartikel, Indiumzinnoxid und fluordotiertes Zinnoxid umfasst;
die Glasflocken einen durchschnittlichen Durchmesser von 30 µm bis 400 µm und eine durchschnittliche Dicke in einem Bereich von 0,1 µm bis 8 µm aufweisen;
die Glasflocken ein Seitenverhältnis des durchschnittlichen Durchmessers geteilt durch die durchschnittliche Dicke von größer oder gleich drei aufweisen; und
die leitfähige Tintenzusammensetzung einen Gewichtsprozentsatz an mit einer elektrisch leitfähigen Beschichtung beschichteten Glasflocken von kleiner oder gleich 50 % umfasst; und
die leitfähige Tintenzusammensetzung ein zweites leitfähiges teilchenförmiges Material umfasst, das aus der Gruppe ausgewählt ist, die Graphit, Graphen und Kohlenstoff-Nanopartikel umfasst.

11. Verfahren zur Herstellung eines bedruckten Artikels, der ein Substrat und eine Markierung umfasst, mit den Schritten:
a. Bereitstellen eines Substrats;
b. Bereitstellen einer leitfähigen Tintenzusammensetzung, die ein Medium und leitfähige Feststoffe nach einem der Ansprüche 1 bis 7 umfasst;
c. Markieren des Substrats mit der leitfähigen Tintenzusammensetzung; und
d. Verdampfen eines Teils des Mediums, um einen bedruckten Artikel zu bilden, der einen leitfähigen Tintenrückstand trägt,
**dadurch gekennzeichnet, dass** die leitfähigen Feststoffe mit einer leitfähigen Beschichtung beschichtete Glasflocken umfassen.

## Revendications

1. Composition d'encre conductrice comprenant des solides conducteurs et un véhicule, **caractérisée en ce que**:
les solides conducteurs comprennent des flocons de verre revêtus d'un revêtement électriquement conducteur;
où le revêtement électriquement conducteur comprend un conducteur choisi dans le groupe comprenant l'argent, le nickel, l'or, les nanoparticules métalliques, l'oxyde d'indium-étain, l'oxyde d'étain dopé au fluor;
les flocons de verre ont un diamètre moyen de 30 µm à 400 µm et une épaisseur moyenne dans une plage de 0,1 µm à 8 µm; et
où les flocons de verre ont un rapport d'aspect du diamètre moyen divisé par l'épaisseur moyenne supérieur ou égal à trois; et
où la composition d'encre conductrice comprend un pourcentage en poids de flocons de verre revêtus d'un revêtement électriquement conducteur inférieur ou égal à 50 %; et
où la composition d'encre conductrice comprend un deuxième matériau particulaire conducteur choisi dans le groupe comprenant le graphite, le graphène, les nanoparticules de carbone.

2. Composition d'encre conductrice selon l'une quelconque des revendications précédentes où la température d'ébullition ou de sublimation du véhicule est supérieure à 10°C et le point de fusion du véhicule est inférieur à 55°C.

3. Composition d'encre conductrice selon l'une quelconque des revendications précédentes où le véhicule comprend de l'eau ou un solvant organique.

4. Composition d'encre conductrice selon l'une quelconque des revendications précédentes où le véhicule comprend un solvant organique choisi dans le groupe comprenant le DCM, le chloroforme, le toluène, le benzène, un éther, un alcool.

5. Composition d'encre conductrice selon l'une quelconque des revendications précédentes où les flocons de verre ont un diamètre moyen de 50 µm à 150 µm.

6. Composition d'encre conductrice selon l'une quelconque des revendications précédentes, où la composition d'encre conductrice comprend une résine liante.

7. Composition d'encre conductrice selon l'une quelconque des revendications précédentes où la composition d'encre conductrice comprend un pourcentage en poids de flocons de verre revêtus d'un revêtement électriquement conducteur inférieur ou égal à 30 %, de préférence encore inférieur ou égal à 15 %, de préférence encore inférieur ou égal à 10 %, de préférence encore inférieur ou égal à 5 %.

8. Article imprimé comprenant un substrat et une marque, où la marque comprend des solides conducteurs, **caractérisé en ce que** les solides conducteurs comprennent des flocons de verre munis d'un revêtement conducteur
où le revêtement électriquement conducteur comprend un conducteur choisi dans le groupe comprenant l'argent, le nickel, l'or, les nanoparticules métalliques, l'oxyde d'indium-étain, l'oxyde d'étain dopé au fluor;
les flocons de verre ont un diamètre moyen de 30 µm à 400 µm et une épaisseur moyenne dans une plage de 0,1 µm à 8 µm; et
où les flocons de verre ont un rapport d'aspect du diamètre moyen divisé par l'épaisseur moyenne supérieur ou égal à trois; et
où la composition d'encre conductrice comprend un second matériau particulaire conducteur choisi dans le groupe comprenant le graphite, le graphène, les nanoparticules de carbone.

9. Article imprimé selon la revendication 8, où la marque est une piste conductrice.

10. Procédé de fabrication d'une composition d'encre conductrice, comprenant les étapes:
a. fourniture d'un véhicule;
b. fourniture de solides conducteurs; et
c. dispersion des solides conducteurs dans le véhicule pour fournir une composition d'encre conductrice,
**caractérisé en ce que** les solides conducteurs comprennent des flocons de verre revêtus d'un revêtement conducteur, où le revêtement électriquement conducteur comprend un conducteur choisi dans le groupe comprenant l'argent, le nickel, l'or, les nanoparticules métalliques, l'oxyde d'indium-étain, l'oxyde d'étain dopé au fluor;
les flocons de verre ont un diamètre moyen de 30 µm à 400 µm et une épaisseur moyenne dans une plage de 0,1 µm à 8 µm; et
où les flocons de verre ont un rapport d'aspect du diamètre moyen divisé par l'épaisseur moyenne supérieur ou égal à trois; et
où la composition d'encre conductrice comprend un pourcentage en poids de flocons de verre revêtus d'un revêtement électriquement conducteur inférieur ou égal à 50 %; et
où la composition d'encre conductrice comprend un second matériau particulaire conducteur choisi dans le groupe comprenant le graphite, le graphène, les nanoparticules de carbone.

11. Procédé de fabrication d'un article imprimé comprenant un substrat et une marque, comprenant les étapes:
a. fourniture d'un substrat;
b. fourniture d'une composition d'encre conductrice comprenant un véhicule et des solides conducteurs selon l'une quelconque des revendications 1 à 7;
c. marquage du substrat avec la composition d'encre conductrice; et
d. évaporation d'une partie du véhicule pour former un article imprimé portant un résidu d'encre conductrice,
**caractérisé en ce que** les solides conducteurs comprennent des flocons de verre revêtus d'un revêtement conducteur.
